# NEUE EUROPÄISCHE PATENTSCHRIFT

(11) **EP 0 647 377 B2**
(45) Veröffentlichungstag und Bekanntmachung des Hinweises auf die Entscheidung über den Einspruch: **06.04.2005**
(45) Hinweis auf die Patenterteilung: 07.01.1999
(21) Anmeldenummer: 94913563.6
(22) Anmeldetag: 09.04.1994
(51) Int. Cl.: H04H 1/00, H04N 5/445

(54) **VERFAHREN UND ANORDNUNG ZUM IDENTIFIZIEREN EINES SENDEBEITRAGES**
PROCESS AND DEVICE FOR IDENTIFYING A PROGRAMME INFORMATION
PROCEDE ET SYSTEME PERMETTANT D'IDENTIFIER DES INFORMATIONS CONCERNANT UNE EMISSION

(30) Priorität: 22.04.1993 DE 4313107
(43) Veröffentlichungstag der Anmeldung: 12.04.1995
(73) Patentinhaber: ROBERT BOSCH GMBH, 70049 Stuttgart (DE)
(72) Erfinder: Koerber, Walter E. J., 45133 Essen (DE)
(74) Vertreter: Hosbach, Hans Ulrich, Dipl.-Ing.
(86) Internationale Anmeldenummer: PCT/EP1994/001103
(87) Internationale Veröffentlichungsnummer: WO 1994/024782

(56) Entgegenhaltungen:
- DE-A- 4 201 696
- US-A- 4 887 308
- US-A- 5 063 610
- US-A- 5 134 719
- US-A- 5 214 792

## Beschreibung

Die Erfindung betrifft ein Verfahren zum Identifizieren eines Ton- und/oder Bildinformationen enthaltenden Sendebeitrags.

Musik- und Bildsendungen über staatliche wie auch private Sendeanstalten werden in großen Umfang "konsumiert". Beim Hören bzw. Ansehen einzelner Sendebeiträge, insbesondere von Musiktiteln, entsteht häufig der Wunsch, den gerade empfangenen Sendebeitrag bzw. Musiktitel besser kennenzulernen oder für eine Aufbewahrung in einem Heim- bzw. Privat-Archiv käuflich zu erwerben. Eine entsprechende gezielte Bedarfsdeckung ist jedoch meist mangels Kenntnis des Titels, des Komponisten oder der Interpreten ausgeschlossen. Die ohnehin seltenen Titel-Ansagen sind oftmals nicht ausreichend oder nur schwer einprägsam; häufig werden die Ansagen auch nicht beachtet oder überhört. Ein schriftliches Notieren von während der Sendung übermittelten Angaben zum Titel ist umständlich und oftmals, beispielsweise beim Empfangen der Sendung über Autoradio im fahrenden Verkehr, nicht gefahrlos möglich. Spezielle Nachfragen bei der jeweiligen Sendeanstalt bringen zudem nur in den seltensten Fällen und dann nur unter erheblichem Aufwand an Zeit und Kosten die gewünschte Information.

In der Patentschrift US 5 063 610 ist ein Rundfunksystem mit einer begleitenden Datenübertragung und -speicherung beschrieben. Parallel zu Musiksendungen werden vom Sender den gesendeten Musikbeitrag identifizierende Informationstexte (vorzugsweise in einem Digitalformat) übertragen. Ein Empfänger empfängt die Rundfunksendung und decodiert und speichert die identifizierenden Informationstexte zwischen, damit diese später ausgegeben werden können. Bei den identifizierenden Informationstexten handelt es sich um Angaben zum Titel, zu den Interpreten und zum Tonträger. Diese Klartext-Informationen können vom Bediener auf einem Display abgelesen oder über einen Papierstreifendrucker ausgegeben werden.

Aufgabe der Erfindung ist es, eine einfache und zuverlässige Identifizierung eines Sendebeitrags, insbesondere eines Musiktitels durch den Bediener eines Empfängers zu ermöglichen.

Diese Aufgabe wird erfindungsgemäß durch ein Verfahren mit den Merkmalen des Anspruchs 1 gelöst.

Die Übertragung der dem Sendebeitrag zugeordneten Identifizierungsinformation ermöglicht es einem Hörer bzw. Bediener, den Musiktitel auf einfache und zuverlässige Weise zu identifizieren. Zu diesem Zweck genügt eine einfache Bedienereingabe (beispielsweise ein Tastendruck), und die Identifizierungsinformation wird gespeichert. Mit Hilfe der gespeicherten Identifizierungsinformation ist es dem Bediener bzw. Hörer dann leicht möglich, den gehörten bzw. gesehenen Sendebeitrag zu identifizieren. Ein dem Empfänger entnehmbarer nicht-flüchtiger Speicher wird verwendet und zum Lesen der Identifizierungsinformation dem Empfänger entnommen und in einer separaten Leseeinrichtung gelesen. Als nicht-flüchtiger Speicher kann beispielsweise eine Magnetkarte oder eine Chipkarte verwendet werden. Nachdem eine Reihe von Identifizierungsinformationen auf der Karte gespeichert sind, entnimmt der Bediener die Karte und setzt sie in die Leseeinrichtung ein. Eine solche vorzugsweise mit einer Datenbank verbundene Leseeinrichtung kann beispielsweise in Geschäften, die CD's, LP's und Kassetten verkaufen und/oder ausleihen, installiert sein. Nach dem Lesen der Identifizierungsinformationen können dem Karteninhaber dort die entsprechenden Informationen über den Musiktitel und/oder die entsprechenden Tonkonserven zur Verfügung gestellt werden.

Eine vorteilhafte Weiterbildung der Erfindung ist dadurch gekennzeichnet, daß die ldentifizierungsinformation sendeseitig codiert und empfängerseitig entweder vor der Speicherung oder nach dem Auslesen aus dem Speicher decodiert wird. Bei der Übertragung der Identifizierungsinformation bedient sich das Verfahren zweckmäßigerweise der vielfältigen vorhandenen technischen Möglichkeiten zur Übertragung codierter Informationen über die zwischen dem Sender und dem Empfänger aufgebaute Nachrichtenverbindung. Beispielsweise kann die codierte Identifizierungsinformation mit Hilfe eines nicht hörbaren Niederfrequenzsignals (>20kHz) oder eines zusätzlichen HF-Hilfsträgers übertragen werden. Ein bekanntes Verfahren zur Übertragung codierter Informationen stellt das System RDS (Radio Data System) dar.

Die Codierung der Identifizierungsinformation bietet ferner die Möglichkeit, jedem Sendebeitrag bzw. Musiktitel einen speziellen Code zuzuordnen, der eine relativ geringe Länge haben kann. Beispielsweise kann die codierte Identifizierungsinformation eine Binärzahl sein, deren Länge sich aus der Anzahl sämtlicher in absehbarer Zeit möglicher Sendebeiträge bzw. Musiktitel ergibt (beispielsweise können mit einer 32-Bit-Zahl ca. 4x10⁹ Sendebeiträge identifiziert werden). Zweckmäßigerweise werden der Identifizierungsinformation Informationen über den Sendebeitrag, wie beispielsweise der Titel, die Interpreten und der Komponist eines Musiktitels zugeordnet, die einander zugeordneten Informationen in einer Datenbank abgelegt und nach dem Lesen der Identifizierungsinformation aus dem Speicher die Informationen über den Sendebeitrag mit Hilfe der Identifizierungsinformation aus der Datenbank abgerufen und ausgegeben. Die Datenbank stellt eine Art Tabelle dar, welche in einer Spalte die codierte Identifizierungsinformation (beispielsweise die o.g. Binärzahl) und in weiteren Spalten die zugeordneten Informationen enthält. Jeweils einer Tabellenzeile ist eine Sendebeitrag zugeordnet. Zweckmäßigerweise erfolgt das Zuordnen der Identifizierungsinformation zu den Informationen über den Sendebeitrag und das Erstellen der Datenbank an einer zentralen Stelle, um die Eindeutigkeit der Zuordnung zu gewährleisten. Die Identifizierungsinformation wird nach dem Lesen als Zeiger auf den entsprechenden Datensatz der Datenbank verwendet. Diese Techniken zur Abfrage einer Datenbank sind im Stand der Technik bekannt.

Bei einer zweckmäßigen Weiterbildung der Erfindung wird die Identifizierungsinformation begleitend zu den Ton- und/oder Bildinformationen gesendet. Die Identifizierungsinformation wird dann empfängerseitig nach dem Trennen von den Ton- und/oder Bildinformationen für ein vorgegebenes Zeitintervall zwischengespeichert, und die zwischengespeicherte Identifizierungsinformation wird im Falle einer in dem vorgegebenen Zeitintervall vorgenommenen Bedienereingabe endgültig gespeichert. Die Zwischenspeicherung der Identifizierungsinformation gewährleistet, daß die Bedienereingabe zu einem beliebigen Zeitpunkt während und/oder unmittelbar nach einer Wiedergabe der Tonund/oder Bildinformationen des Sendebeitrags vorgenommen werden kann. Vorteilhaft ist es, daß die Identifizierungsinformation jedes Sendebeitrags solange wiederholt gesendet, empfangen und zwischengespeichert wird, bis der folgende Sendebeitrag beginnt. Sind beispielsweise zwei Sendebeiträge bzw. Musiktitel durch einen kurzen Wortbeitrag getrennt, so wird während des Wortbeitrags weiterhin die ldentifizierungsinformation des vorhergehenden Musiktitels übertragen. Der Hörer kann während des Hörens (und/oder Sehens) des Sendebeitrags und auch noch unmittelbar danach entscheiden, ob er eine Eingabe vornimmt und somit die Identifizierung des Sendebeitrags ermöglicht.

Eine Anordnung zur Durchführung des erfindungsgemäßen Verfahrens weist fünf wesentliche Komponenten auf: ein Filtermittel, ein vom Benutzer selektiv betätigbares Eingabemittel, einen Speicher, einen Decodierer und eine Leseeinrichtung. Das Filtermittel ist im bzw. am Empfänger angeordnet und trennt aus dem Eingangssignal des Empfängers eine dem empfangenen Sendebeitrag entsprechende codierte ldentffizierungsinformation ab. Das vom Benutzer selektiv betätigbare Eingabemittel ist ebenfalls am Empfänger angeordnet und dient dem Auswählen des empfangenen Sendebeitrags für eine Identifizierung. Der Speicher ist mit dem Eingabemittel gekoppelt und speichert in Abhängigkeit von einer Betätigung des Eingabemittels die Identifizierungsinformation. Der Decodierer decodiert die Identifizierungsinformation und ist mit dem Speicher koppelbar (wenn der Speicher die codierte Identifizierungsinformation speichert, ist der Eingang des Decodierers mit dem Speicher koppelbar, und wenn der Speicher die decodierte Identifizierungsinformation speichert, ist der Ausgang des Decodierers mit dem Speicher koppelbar). Die Leseeinrichtung ist mit dem Speicher koppelbar und liest die in dem Speicher gespeicherte Identifizierungsinformation und wertet sie aus.

Bei der Anordnung ist der Speicher nicht-flüchtig, aus dem Empfänger entnehmbar und in eine Leseeinrichtung einsetzbar, wobei die Leseeinrichtung vom Empfänger getrennt angeordnet und mit einer Ausgabeeinrichtung gekoppelt ist. Wenn eine Identifizierungsinformation aufgrund einer Betätigung des Eingabemittels gespeichert worden ist, kann der nicht-flüchtige Speicher aus dem Empfänger entnommen und in die separate Leseeinrichtung eingesetzt werden. Dabei kann der Speicher entweder die codierte oder die decodierte Identifizierungsinformation speichern. Wenn der Speicher die codierte Identifizierungsinformation speichert, ist der Decodierer in der Leseeinrichtung angeordnet, wobei die codierte Identifizierungsinformation nach dem Lesen decodiert wird. Bei dem bevorzugten Ausführungsbeispiel ist die Leseeinrichtung mit einer Datenbank gekoppelt, die Informationen über den Sendebeitrag, wie beispielsweise den Titel, die Interpreten und den Komponisten eines Musiktitels enthält. Dabei greift die Leseeinrichtung mit Hilfe der gelesenen Identifizierungsinformation auf die Datenbank zu. Bei diesem Ausführungsbeispiel gibt die mit der Leseeinrichtung gekoppelte Ausgabeeinrichtung die Informationen über den Sendebeitrag aus, in dem sie diese ausdruckt und/oder zur Anzeige bringt.

Das Eingabemittel weist zweckmäßigerweise ein Flip-Flop auf, dessen Setz-Eingang mit einer Taste gekoppelt ist und dessen Rücksetz-Eingang derart mit dem Speicher gekoppelt ist, daß nach Speichern der Identifizierungsinformation das Flip-Flop zurückgesetzt wird. Eine solche Anordnung hat den Vorteil, daß die mit dem Wunsch der Identifizierung des Sendebeitrags verbundene Eingabe bereits vorgenommen werden kann, bevor die codierte oder decodierte Identifizierungsinformation des gerade gesendeten Beitrags zur Speicherung bereitsteht. Dies ist insbesondere dann erforderlich, wenn die Identifizierungsinformation nur am Ende des Sendebeitrags oder in bestimmten Abständen wiederholt übertragen wird.

Neben dem nicht-flüchtigen Speicher (der aus dem Empfänger entnommen werden kann) kann die Einrichtung einen weiteren, flüchtigen Speicher (beispielsweise einen RAM) zur Zwischenspeicherung codierter und/oder decodierter Identifizierungsinformationen enthalten. Dieser Zwischenspeicher kann so angeordnet sein, daß er eine zum Sendebeitrag begleitend übertragene Identifizierungsinformation speichert und sie dann an den nicht-flüchtigen Speicher ausgibt, wenn das Eingabemittel vom Bedienerbetätigt worden ist. Das Filtermittel, der Decodierer, das Eingabemittel, der Zwischenspeicher (RAM) und der nicht-flüchtige Speicher sowie eine die Übertragungen zwischen diesen Baugruppen steuernde Steuereinrichtung können über einen gemeinsamen Bus gekoppelt sein. Die Steuereinrichtung kann dabei einen Mikroprozessor enthalten.

Vorteilhafte Weiterbildungen der Erfindung sind in den Unteransprüchen gekennzeichnet.

Im folgenden wird die Erfindung anhand von in der Zeichnung dargestellten Ausführungsbeispielen näher beschrieben. In der Zeichnung zeigen:
- Fig. 1: eine Prinzipdarstellung einer Einrichtung zur Durchführung des erfindungsgemäßen Verfahrens; und
- Fig. 2 - 5: Blockschaltbilder von Ausführungsbeispielen der Anordnung.

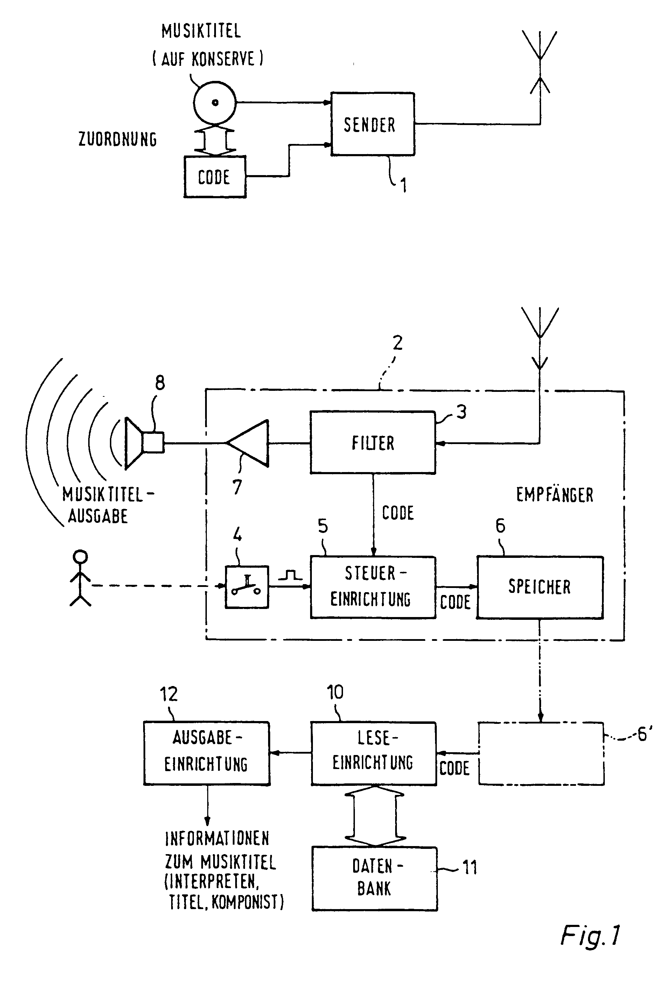

Fig. 1 zeigt eine Prinzipdarstellung einer Einrichtung zur Ausführung des erfindungsgemäßen Verfahrens. Bevor ein Musiktitel von einem Sender 1 ausgestrahlt wird, wird ihm ein Identifizierungscode zugeordnet. Dies erfolgt zweckmäßigerweise an einer zentralen Stelle, um zu gewährleisten, daß jedem Musiktitel ein spezieller, einmaliger Identifizierungscode zugeordnet wird. Bevor der auf unterschiedliche Konserven aufgezeichnete Musiktitel an die Sendeanstalten weitergegeben wird, wird der zugeordnete Identifizierungscode auf der Musikkonserve oder einem begleitenden Informationsträger vermerkt. Sendeseitig wird der Identifizierungscode entweder automatisch oder per Bedienereingabe parallel zu dem auf der Konserve gespeicherten Musiktitel dem Sender 1 eingegeben und von diesem gesendet.

Die in üblicher Weise codierten bzw. modulierten Signale (Toninformationen und Identifizierungscode) gelangen dann zu einem Empfänger 2. Der Empfänger 2 weist ein Filter 3 auf, welches den Identifizierungscode von den Tonsignalen trennt. Die den Musiktitel bildenden Toninformationen werden in bekannter Weise über einen Verstärker 7 und Lautsprecher 8 ausgegeben und gelangen so zum Hörer bzw. Bediener des Empfängers. Der herausgefilterte bzw. abgetrennte Identifizierungscode wird an eine Steuereinrichtung 5 weitergeleitet, die mit einem Eingabemittel 4 und einem Speicher 6 gekoppelt ist. Das Eingabemittel 4, beispielsweise eine Taste, wird vom Hörer bzw. Bediener betätigt, sofern dieser eine Identifizierung des gerade gehörten Musiktitels ) wünscht. Bei Betätigen des Eingabemittels 4 wird ein Impuls an die Steuereinrichtung 5 weitergegeben, welche daraufhin den vom Filter 3 empfangenen Code an den Speicher 6 weitergibt. Der Speicher 6 speichert den selektiv vom Bediener gewählten Identifizierungscode.

Je nach Ausbildung der Einrichtung und Größe des Speichers 6 können vom Bediener nacheinander die Identifizierungscodes mehrerer gehörter Musiktitel gespeichert werden. Der Speicher 6 ist ein nicht-flüchtiger Speicher, d.h. er behält die eingespeicherten identifizierungscodes auch bei abgeschalteter Stromversorgung des Empfängers 2. Der Speicher 6 kann beispielsweise eine Magnetkarte oder eine Chipkarte sein.

Wenn der Bediener zu einem späteren Zeitpunkt die Identifizierung der gehörten und selektiv ausgewählten Musiktitel wünscht, entnimmt er dem Empfänger 2 den Speicher 6 und koppelt den Speicher mit einer an einem anderen Ort angeordneten Leseeinrichtung 10. Die Kopplung kann beispielsweise durch Einlegen der Magnet- oder Chipkarte in eine entsprechende Vorrichtung erfolgen. Die Leseeinrichtung 10 liest von dem Speicher 6' die gespeicherten Identifizierungscodes und ordnet diesen Codes Informationen zum jeweiligen Musiktitel (Interpreten, Titel, Komponist, Erscheinungsjahr usw.) zu, indem sie mit Hilfe des jeweiligen speziellen Identifizierungscodes eines Musiktitels auf einen Datensatz einer Datenbank 11 zugreift. Die Datenbank 11 ist in bekannter Weise tabellenartig so organisiert, daß der Identifizierungscode als Zeiger auf eine Tabeilenzeile bzw. einen Datensatz verwendet werden kann. Die Tabellenzeile enthält in entsprechenden Feldern Informationen zum Musiktitel. Die so von der Leseeinrichtung 10 gewonnenen Informationen zum Musiktitel werden an eine Ausgabeeinrichtung 12 weitergeleitet. Die Ausgabeeinrichtung 12 kann die so gewonnenen Informationen anzeigen und/oder ausdrucken. Mit Hilfe der gewonnenen Informationen ist es dem Bediener relativ leicht möglich, gezielt Musikkonserven der entsprechenden Musiktitel zu erwerben.

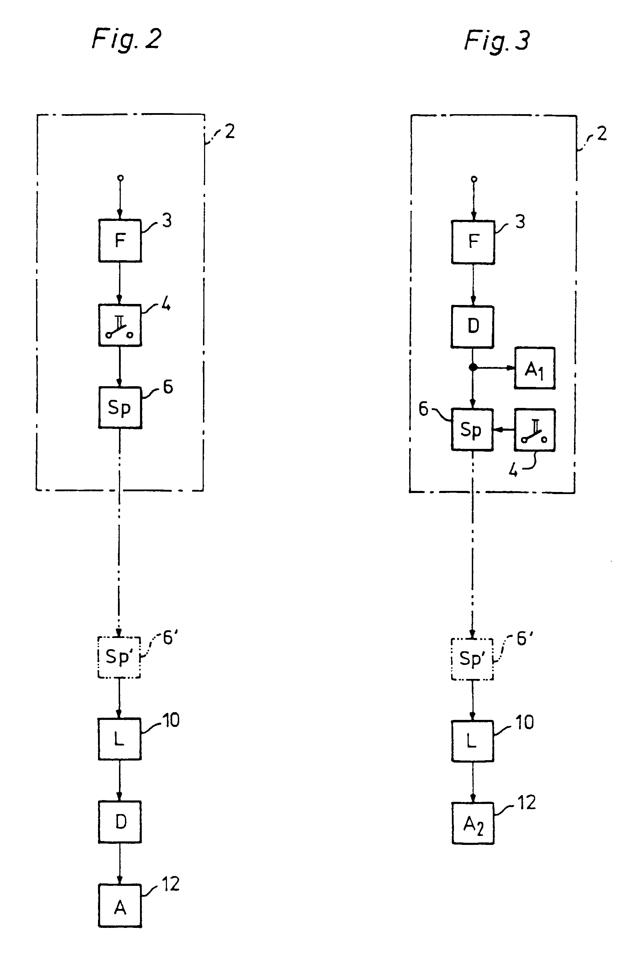

Im Rahmen des Erfindungsgedankens sind zahlreiche Modifikationen der Einrichtung zur Ausführung des erfindungsgemäßen Verfahrens denkbar. Einige dieser Ausführungsbeispiele sind in den Figuren 2 bis 5 als Blockschaltbilder dargestellt.

Figur 2 zeigt eine Blockdarstellung eines Ausführungsbeispiels, bei dem der Empfänger 2 ein Minimum zusätzlicher Komponenten aufweist. Neben den (in Fig. 2 nicht dargestellten) Demodulations- und Verstärkerschaltungen weist der Empfänger 2 zur Ausführung des erfindungsgemäßen Verfahrens nur drei zusätzliche Komponenten auf. Ein Filter 3 (F) dient der Abtrennung des Identifizierungscodes vom empfangenen Signal. Das Ausgangssignal des Filters 3 gelangt über ein Eingabemittel 4 zu einem Speicher 6 (Sp). Der Speicher 6 speichert bei Betätigen des Eingabemittels 4 den ldentifizierungscode. Der Speicher ist nicht-flüchtig, aus dem Empfänger 2 entnehmbar und mit einer Leseeinrichtung 10 (L) koppelbar.

Wenn der Speicher 6' (Sp') mit der Leseeinrichtung 10 gekoppelt wird, wird der Identifizierungscode ausgelesen und an einen Decodierer (D) weitergeleitet. Der Decodierer (D) decodiert den Identifizierungscode und gibt die decodierte Identifizierungsinformation an eine Ausgabeeinrichtung 12 (A) weiter. Die Ausgabeeinrichtung zeigt die Identifizierungsinformation an und/oder druckt sie aus. Leseeinrichtung (10), Decodierer (D) und Ausgabeeinrichtung 12 sind separat vom Empfänger 2 und ggf. in räumlicher Entfernung angeordnet.

Die von der Ausgabeeinrichtung 12 ausgegebene Identifizierungsinformation identifiziert einen Musiktitel in eindeutiger Weise. Ähnlich einer bei Buchtiteln verwendeten ISBN-Nummer kann der Bediener mit Hilfe der decodierten und ausgegebenen Identifizierungsinformation gezielt seinen Bedarf an einer Konserve des gehörten Musiktitels decken.

Fig. 3 zeigt ein weiteres Ausführungsbeispiel einer Einrichtung zur Durchführung des erfindungsgemäßen Verfahrens. Bei dieser Einrichtung weist der Empfänger 2 zusätzlich einen Decodierer (D) auf, der unmittelbar mit dem Ausgang des Filters 3 gekoppelt ist. Der Decodierer (D) gibt die decodierte Identifizierungsinformation sowohl an den Speicher 6 (Sp) als auch an eine erste Ausgabeeinrichtung (A₁) aus. Die erste Ausgabeeinrichtung (A₁) zeigt die Identifizierungsinformation an und/oder druckt sie aus. Der Bediener des Empfängers 2 kann so die Identifizierungsinformation (eine spezielle Nummer und ggf. zusätzlich den Titel und die Interpreten) unmittelbar weiterverwenden. Ein Eingabemittel 4 ist mit dem Speicher 6 gekoppelt; bei einer Betätigung speichert der Speicher die gerade anliegende Identifizierungsinformation. Im Unterschied zu Fig. 2, wo das Eingabemittel im Ruhezustand die Verbindung zwischen Filter 3 und Speicher 6 unterbricht, ist im Ausführungsbeispiel gemäß Fig. 3 das Eingabemittel 4 mit einem separaten Steuereingang des Speichers 6 gekoppelt.

Der die decodierte Identifizierungsinformation speichernde Speicher 6 kann dem Empfänger 2 entnommen und mit einer Leseeinrichtung 10 (L) gekoppelt werden. Die vom Empfänger 2 getrennt angeordnete Leseeinrichtung 10 liest die Identifizierungsinformation aus dem Speicher 6' (Sp') und gibt sie an eine zweite Ausgabeeinrichtung (A₂) weiter, die die gelesenen Informationen in der oben genannten Weise ausgeben kann.

Die Leseeinrichtungen 10 bei den Ausführungsbeispielen gemäß den Figuren 2 und 3 können in der anhand von Figur 1 dargestellten Weise mit einer Datenbank gekoppelt sein, um weitere Informationen über den Musiktitel gewinnen zu können.

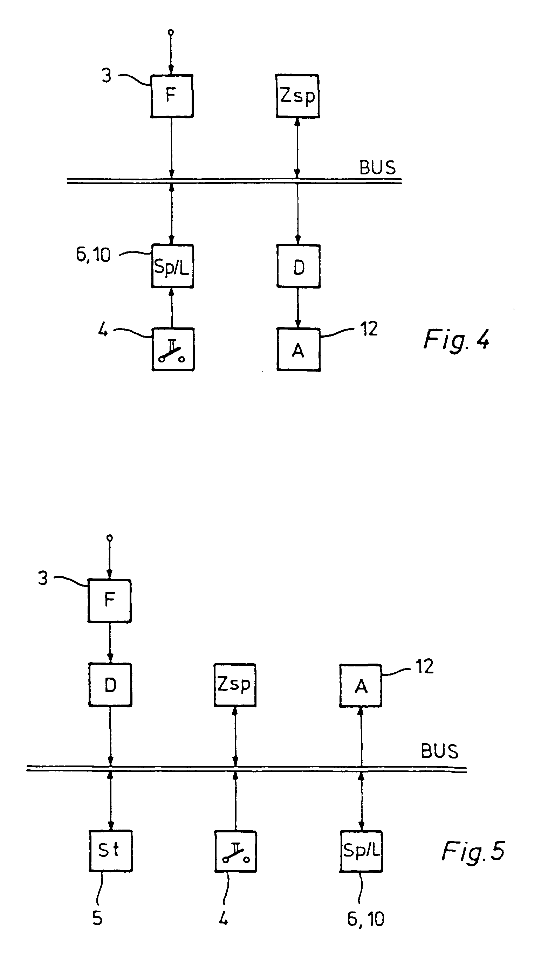

Die Figuren 4 und 5 zeigen Ausführungsbeispiele der Einrichtung, bei denen die empfängerseitigen Komponenten jeweils über einen Bus miteinander gekoppelt sind.

Figur 4 zeigt eine Einrichtung, bei der ein Filter 3 die codierte Identifizierungsinformation auf einen Bus ausgibt. Diese auf den Bus ausgegebene Information kann von einem Zwischenspeicher (Zsp) gespeichert werden. Außerdem ist ein Speicher 6 mit einer Leseeinrichtung 10 (Sp/L) mit dem Bus und mit einem Eingabemittel 4 gekoppelt. Der Bus ist ferner mit einem Decodierer (D) gekoppelt, der die Identifizierungsinformation decodiert und an eine Ausgabeeinrichtung 12 weitergibt.

Figur 5 zeigt eine Einrichtung, bei der die von einem Filter 3 vom Eingangssignal eines Empfängers abgetrennte Identifizierungsinformation sofort an einen Decodierer (D) weitergeleitet und decodiert wird. Der Decodierer (D) gibt die decodierte Identifizierungsinformation auf einen Bus aus. Mit dem Bus sind ferner eine Steuereinrichtung 5 (St), ein Eingabemittel 4, ein Zwischenspeicher (Zsp), eine Ausgabeeinrichtung 12 (A) und ein nicht-flüchtiger Speicher 6 mit einer Leseeinrichtung 10 (Sp/L) gekoppelt. Die Steuereinrichtung 5 weist einen Mikroprozessor auf und steuert den Informationsaustausch der einzelnen Komponenten über den Bus. In Abhängigkeit von den im jeweiligen Ausführungsbeispiel gewünschten Eingabemöglichkeiten kann das Eingabemittel 4 im einfachsten Fall aus einer Taste bestehen oder auch eine Tastatur aufweisen.

Im Rahmen des Erfindungsgedankens sind zahlreiche weitere Modifikationen und Ausführungsbeispiele denkbar. Der ausgegebene Identifizierungscode kann in Form von Ziffern und/oder Buchstaben ausgedruckt werden. Auch ist die Verwendung eines Strichcodes (in der Art des EAN-Strichcodes) denkbar. Ebenso ist die Anwendung des erfindungsgemäßen Verfahrens auf Einrichtungen zur Bildübertragung (z.B. Video) in analoger Weise denkbar. Sender und Empfänger können auch über Kabel miteinander verbunden sein. Auch ist ein Zugriff der Leseeinrichtung des Speichers auf eine zentrale Datenbank denkbar, die über herkömmliche Telefonleitungen oder andere Nachrichtenverbindungen realisierbar ist.

## Patentansprüche

1. Verfahren zum Identifizieren eines Ton- und/oder Bildinformationen enthaltenden Sendebeitrags, insbesondere eines Musiktitels, wobei
dem Sendebeitrag eine ldentifizierungsinformation zugeordnet wird und die Ton- und/oder Bildinformationen und die Identifizierungsinformation von einem Sender (1) zu einem Empfänger (2) übertragen werden,
die Identifizierungsinformation empfängerseitig von den Ton- und/oder Bildinformationen getrennt wird,
eine Bedienereingabe während einer Wiedergabe der Ton- und/oder Bildinformationen des Sendebeitrags überwacht wird, mit der der Bediener die Identifizierung des aktuellen Sendebeitrags anfordert,
die Identifizierungsinformation bei jeder Bedienereingabe in einem dem Empfänger (2) entnehmbaren nicht-flüchtigen Speicher (6) gespeichert wird,
der Speicher (6) dem Empfänger (2) entnommen und mit einer separaten Leseeinrichtung (10) gekoppelt wird, und
die Identifizierungsinformation mittels der Leseeinrichtung (10) aus dem Speicher (6) gelesen und zur Identifizierung des Sendebeitrags weiterverarbeitet wird.

2. Verfahren nach Anspruch 1, **dadurch gekennzeichnet, daß** die Identifizierungsinformation einen Code enthält, der nach dem Lesen aus dem Speicher (6) decodiert wird.

3. Verfahren nach Anspruch 2, **dadurch gekennzeichnet,**
**daß** dem Code Informationen über den Sendebeitrag, wie beispielsweise der Titel, die Interpreten und der Komponist eines Musiktitels, zugeordnet werden,
**daß** der Code und die ihm zugeordneten Informationen in einer Datenbank (11) abgelegt werden,
**daß** die Leseeinrichtung (10) mit der Datenbank (11) gekoppelt wird, und
**daß** nach dem Lesen der Identifizierungsinformation aus dem Speicher (6) die Informationen über den Sendebeitrag mit Hilfe der Indentifizierungsinformation aus der Datenbank (11) abgerufen und ausgegeben werden.

4. Verfahren nach einem der Ansprüche 1 bis 3, **dadurch gekennzeichnet,**
**daß** die Identifizierungsinformation begleitend zu den Ton- und/oder Bildinformationen gesendet und empfängerseitig nach dem Trennen von den Ton- und/oder Bildinformationen für ein vorgegebenes Zeitintervall zwischengespeichert wird und
**daß** die zwischengespeicherte Indentifizierungsinformation im Falle einer in dem vorgegebenen Zeitintervall vorgenommenen Bedienereingabe in dem nicht-flüchtigen Speicher (6) gespeichert wird.

## Claims

1. Method of identifying a transmission containing audio and/or video information, in particular a musical title, in which identification information is assigned to the transmission and the audio and/or video information and the identification information are transmitted by a transmitter (1) to a receiver (2), the identification information is separated from the audio and/or video information at the receiving end, an operator input by means of which the operator requests identification of the current transmission is monitored during the reproduction of the audio and/or video information of the transmission, the identification information is stored upon each operator input in a non-volatile memory (6) which can be removed from the receiver (2), the memory (6) is removed from the receiver (2) and is connected to a separate reading device (10) and the identification information is read out of the memory (6) by means of the reading device (10) and is further processed in order to identify the transmission.

2. Method according to claim 1, **characterised in that** the identification information contains a code which is decoded once it has been read out of the memory (6).

3. Method according to claim 2, **characterised in that** information about the transmission, e.g. the title, the performer and the composer of a musical title, is assigned to the code, that the code and the information assigned thereto are filed in a database (11), that the reading device (10) is connected to the database (11) and that, once the identification information has been read out of the memory (6), the information about the transmission is retrieved from the database (11) with the aid of the identification information and output.

4. Method according to one of claims 1 to 3, **characterised in that** the identification information is transmitted simultaneously with the audio and/or video information and, once it has been separated from the audio and/or video information, is stored temporarily for a predetermined period of time at the receiving end and that the temporarily stored identification information is stored in the non-volatile memory (6) in the event of an operator input effected within the predetermined period of time.

## Revendications

1. Procédé d'identification d'une contribution d'émission contenant des informations de son et/ou d'image, en particulier d'un titre de musique, où
à la contribution d'émission est associée une information d'identification, et les informations de son et/ou d'image et l'information d'identification étant transmises d'un émetteur (1) à un récepteur (2),
l'information d'identification étant séparée côté récepteur vis-à-vis des informations de son et/ou d'image,
une introduction par un opérateur, faite pendant une restitution des informations de son et/ou d'image de la contribution d'émission, étant surveillée, par laquelle l'opérateur fait requête de l'identification de la contribution d'émission actuelle,
l'information d'identification, à chaque introduction par opérateur, est mémorisée dans une mémoire non volatile (6) susceptible d'être prélevée du récepteur (2),
la mémoire (6) est prélevée du récepteur (2) et est couplée à un dispositif de lecture (10) séparé, et
l'information d'identification est lue au moyen du dispositif de lecture (10) à partir de la mémoire (6) et est retraitée dans le but d'identifier la contribution à l'émission.

2. Procédé selon la revendication 1, **caractérisé en ce que** l'information d'identification contient un code qui est décodé après lecture depuis la mémoire (6).

3. Procédé selon la revendication 2, **caractérisé en ce qu'**au code sont associées des informations concernant la contribution d'émission, telles que, par exemple, le titre, les interprètes et le compositeur d'un titre de musique, **en ce que** le code et les informations lui étant associées sont placés dans une banque de données (11),
**en ce que** le dispositif de lecture (10) est couplé à la bande de données (11), et
**en ce qu'**après lecture de l'information d'identification à partir de la mémoire (6), les informations concernant la contribution d'émission sont appelées à l'aide de l'information d'identification, à partir de la banque de données (11), et sont sorties.

4. Procédé selon l'une des revendications 1 à 3, **caractérisé en ce que** l'information d'identification est envoyée en accompagnement aux informations de son et/ou d'image et, côté récepteur, est soumise à un stockage intermédiaire après séparation vis-à-vis des informations de son et/ou d'image, pendant une durée d'intervalle de temps prédéterminé, et l'information d'identification ayant été soumise à un stockage intermédiaire, dans le cas d'une introduction opérateur effectuée dans l'intervalle de temps prédéterminé, est mémorisée dans la mémoire non volatile (6).
